# FASCICULE DE BREVET EUROPEEN

(11) **EP 4 034 428 B1**
(45) Date de publication et mention de la délivrance du brevet: **25.09.2024**
(21) Numéro de dépôt: 20775034.0
(22) Date de dépôt: 11.08.2020
(51) Int. Cl.: B60R 13/02, B60R 13/08, B62D 25/04

(54) **PIÈCE D'ÉTANCHÉITÉ D'AILE DE CARROSSERIE DE VÉHICULE AUTOMOBILE**
FLÜGELDICHTUNGSTEIL FÜR KRAFTFAHRZEUGKAROSSERIE
MOTOR VEHICLE BODY WING SEALING PART

(30) Priorité: 24.09.2019 FR 1910494
(43) Date de publication de la demande: 03.08.2022
(73) Titulaire: Stellantis Auto SAS, 78300 Poissy (FR)
(72) Inventeur: KANTER, Patricia, 91300 MASSY (FR); SIMON, Herve, 78190 TRAPPES (FR)
(86) Numéro de dépôt international: PCT/FR2020/051458
(87) Numéro de publication internationale: WO 2021/058885

(56) Documents cités:
- EP-A1- 2 067 667
- EP-B1- 2 067 667
- US-A1- 2008 111 394

## Description

Le contexte technique de la présente invention est celui des ailes de carrosserie de véhicules automobiles, et plus particulièrement celui de l'étanchéité acoustique d'ailes avant de carrosserie afin de limiter les nuisances sonores. Plus particulièrement, l'invention a trait à une pièce d'étanchéité d'aile de carrosserie de véhicule automobile.

Dans l'état de la technique, on connait des pièces d'étanchéité d'ailes de carrosserie de véhicules automobiles composées d'une matière insonorisante et destinées à être fixées latéralement à une structure du véhicule automobile tel un châssis, dans le prolongement des piliers de maintien du pare-brise du véhicule automobile, dits piliers A. Chaque pièce d'étanchéité d'aile de carrosserie s'étend sur la partie latérale de l'aile de carrosserie, et entre l'aile de carrosserie et une porte avant du véhicule automobile, de sorte à assurer une isolation acoustique de l'habitacle par rapport aux bruits émis par le moteur du véhicule automobile.

L'inconvénient de ces pièces d'étanchéité d'ailes de carrosserie de véhicule automobile est qu'elles se limitent à assurer une isolation latérale, autrement dit sur un flanc du véhicule automobile, au niveau de l'aile de carrosserie à l'avant. Une telle pièce d'étanchéité laisse ainsi une zone technique intérieure du véhicule automobile apparente, couverte partiellement par l'aile de carrosserie, cette zone technique intérieure de étant alors visible du côté supérieur de l'aile de carrosserie, à la base du pare-brise du côté du pilier A.

On connait par ailleurs des véhicules automobiles pour lesquels la zone technique intérieure est masquée par un enjoliveur de pare-brise. L'enjoliveur de pare-brise ferme alors la zone technique intérieure en s'étendant le long du pilier A jusqu'au capot, couvrant ainsi la zone technique intérieure.

Un inconvénient de ces enjoliveurs de pare-brise réside dans le fait qu'ils n'apportent pas de solution technique satisfaisante pour toutes les conformations de capot du véhicule.

Le document US2008/111394 A1 divulgue une pièce d'étanchéité présentant les caractéristiques techniques du préambule de la revendication 1.

La présente invention a pour objet de proposer une nouvelle pièce d'étanchéité d'aile de carrosserie de véhicule automobile afin de répondre au moins en grande partie aux problèmes précédents et de conduire en outre à d'autres avantages.

Un autre but de l'invention est de proposer une pièce d'étanchéité d'aile de carrosserie de véhicule automobile économique en matériaux, de sorte à limiter le coût d'une telle pièce par rapport aux pièces d'étanchéité d'aile de carrosserie de véhicule automobile existantes.

Un autre but de l'invention est de proposer une pièce d'étanchéité d'aile de carrosserie de véhicule automobile configurée pour limiter le nombre d'opérations nécessaires à sa fabrication, de sorte à diminuer le coût de revient de ladite pièce.

Un autre but de l'invention est de proposer une pièce d'étanchéité d'aile de carrosserie de véhicule automobile configurée pour limiter le nombre d'opérations nécessaires à son assemblage avec la structure du véhicule automobile, de sorte à optimiser le temps de production dudit véhicule automobile.

Un autre but de l'invention est de proposer une pièce d'étanchéité d'aile de carrosserie de véhicule automobile universelle configurée pour s'adapter à différentes structures de véhicules automobiles, et plus particulièrement une pièce d'étanchéité d'aile de carrosserie de véhicule automobile indépendante du capot.

Selon un premier aspect de l'invention, on atteint au moins l'un des objectifs précités avec une pièce d'étanchéité d'aile de carrosserie de véhicule automobile, la pièce d'étanchéité comprenant une partie de fermeture destinée à être interposée entre l'aile de carrosserie du véhicule automobile et une structure dudit véhicule automobile, en ce que la pièce d'étanchéité comprend une extension d'étanchéité située à une extrémité supérieure de la partie de fermeture et reliée à la partie de fermeture par une liaison flexible. La pièce d'étanchéité conforme au premier aspect de l'invention est une pièce d'étanchéité configurée pour coopérer avec l'aile de carrosserie du véhicule automobile afin de limiter les nuisances acoustiques émises par ledit véhicule automobile. La pièce d'étanchéité conforme au premier aspect de l'invention comprend deux éléments d'isolation acoustique, à savoir la partie de fermeture et l'extension d'étanchéité. La partie de fermeture et l'extension d'étanchéité sont configurées pour chacune isoler acoustiquement, en des localisations distinctes, un habitacle du véhicule automobile des nuisances sonores provenant notamment d'un compartiment moteur dudit véhicule automobile.

La partie de fermeture est destinée à assurer une isolation acoustique latérale entre l'aile de carrosserie du véhicule automobile et la structure dudit véhicule automobile. L'isolation acoustique est dite « latérale » en ce sens que la partie de fermeture est destinée à coopérer avec une partie latérale de ladite aile de carrosserie s'étendant principalement sur un flanc du véhicule automobile.

La partie de fermeture est délimitée par l'extrémité supérieure et une extrémité inférieure opposée à l'extrémité supérieure. Les dénominations « supérieure » et « inférieure » se réfèrent à la position prise par la partie de fermeture sur le flanc du véhicule automobile équipé de la pièce d'étanchéité selon le premier aspect de l'invention. L'extrémité supérieure est destinée à être orientée vers le capot du véhicule automobile et l'extrémité inférieure est destinée à être orientée à l'opposé, vers un pare-choc du véhicule automobile. Dès lors, l'extension d'étanchéité, située à l'extrémité supérieure de la partie de fermeture, est destinée à être orientée vers le capot.

L'extension d'étanchéité est destinée à assurer une isolation acoustique supérieure. L'isolation acoustique est « supérieure » en ce sens que l'extension d'étanchéité est destinée à coopérer avec une partie supérieure de l'aile de carrosserie qui est située dans le prolongement de la partie latérale de ladite aile de carrosserie, côté capot.

L'extension d'étanchéité permet de masquer une zone technique de l'intérieur du véhicule automobile équipé de la pièce d'étanchéité conforme au premier aspect de l'invention. Cette zone technique, qui est située à proximité du compartiment moteur, est habituellement laissée apparente lors de l'utilisation de pièces d'étanchéité antérieures à la présente invention.

La liaison flexible prend la forme d'une charnière reliant la partie de fermeture à l'extension d'étanchéité, afin de permettre à l'extension d'étanchéité de pouvoir pivoter autour d'un axe de rotation et relativement à la partie de fermeture. Cette possibilité de pouvoir pivoter permet de faciliter la mise en place de la pièce d'étanchéité au niveau de l'aile de carrosserie du véhicule automobile. Plus particulièrement, cette possibilité de pouvoir pivoter permet de faciliter la mise en place de l'extension d'étanchéité de la pièce d'étanchéité au niveau de la partie supérieure de l'aile de carrosserie du véhicule automobile, une fois la partie de fermeture de la pièce d'étanchéité fixée solidairement à l'aile de carrosserie au niveau de la partie latérale de l'aile de carrosserie du véhicule automobile.

L'invention conforme à son premier aspect est ainsi configurée pour s'étendre tout le long de l'aile de carrosserie du véhicule automobile latéralement et en partie supérieure de sorte à améliorer l'isolation acoustique entre le compartiment moteur et l'habitacle dudit véhicule automobile.

La pièce d'étanchéité d'aile de carrosserie de véhicule automobile conforme au premier aspect de l'invention comprend avantageusement au moins un des perfectionnements ci-dessous, les caractéristiques techniques formant ces perfectionnements pouvant être prises seules ou en combinaison :
- selon une première alternative, l'extension d'étanchéité est rapportée à la partie de fermeture au niveau de la liaison flexible qui prend alors la forme d'une charnière fixée d'une part sur l'extension d'étanchéité et, d'autre part, sur la partie de fermeture de la pièce d'étanchéité. D'une manière générale, la liaison flexible peut être fixée sur l'extension d'étanchéité et la partie de fermeture par tout moyen de fixation, qu'il soit détachable ou permanent. Un exemple de moyen de fixation détachable est par vissage. Un exemple de moyen de fixation permanent est un moyen de fixation non détachable, tel que par exemple par collage. Selon une deuxième alternative préférée, l'extension d'étanchéité et la liaison flexible sont issues de matière avec la partie de fermeture. On entend par « issues de matière » le fait que, dans la pièce d'étanchéité conforme au premier aspect de l'invention, l'extension d'étanchéité, la liaison flexible et la partie de fermeture ne peuvent être séparés les unes des autres sans qu'il ne soit porté atteinte à tout ou partie de leur intégrité. Ainsi, dans la pièce d'étanchéité selon l'invention, l'extension d'étanchéité, la liaison flexible et la partie de fermeture forment un ensemble qualifié de monobloc du fait qu'ils ne forment ensemble qu'une seule et même pièce continue, faite d'un seul tenant et obtenue au cours d'un même procédé de fabrication. L'invention conforme à son premier aspect permet ainsi avantageusement d'obtenir une pièce d'étanchéité préfabriquée, dont la fabrication est simplifiée puisqu'elle s'affranchi de l'assemblage de l'extension d'étanchéité, la liaison flexible et la partie de fermeture ainsi que de la présence de moyens de fixation entre l'extension d'étanchéité et la liaison flexible, et entre la liaison flexible et la partie de fermeture. De plus, une pièce d'étanchéité monobloc peut être usinée dans une variété de dimensions différentes de sorte à être adapté à différents modèles de véhicules automobiles. Une telle pièce d'étanchéité est par ailleurs plus rigide et plus légère. Lorsqu'elle est issue de matière, la pièce d'étanchéité d'aile de carrosserie de véhicule automobile conforme au premier aspect de l'invention est préférentiellement obtenue par moulage. Lorsque la pièce d'étanchéité d'aile de carrosserie de véhicule automobile conforme au premier aspect de l'invention est démoulée, elle est dans une conformation dite « déployée ». Elle s'étend avantageusement uniquement dans un plan principal à sa fabrication, ce qui facilite le moulage En vue de la mise en oeuvre de la pièce d'étanchéité d'aile de carrosserie de véhicule automobile conforme au premier aspect de l'invention dans le véhicule automobile, ladite pièce d'étanchéité est dans une conformation dite « repliée », de sorte à s'étendre dans un plan secondaire sécant au plan principal. Le pliage est obtenu lors de la rotation de l'extension d'étanchéité selon l'axe de rotation par rapport à la partie de fermeture, au niveau de la liaison flexible, en vue de la mise en oeuvre de la pièce d'étanchéité d'aile de carrosserie de véhicule automobile conforme au premier aspect de l'invention dans le véhicule automobile ;
- la liaison flexible comprend au moins deux amincissements locaux de matière, chaque amincissement local formant une zone de déformation flexible. L'amincissement local est une zone de faible résistance mécanique par rapport au reste de la pièce d'étanchéité. L'amincissement local est une zone de moindre épaisseur relativement au reste de la pièce d'étanchéité. Par exemple, l'amincissement local comprend une rainure. Les amincissements locaux sont configurés pour que la liaison flexible se déforme de sorte à ce que l'extension d'étanchéité puisse pivoter autour de l'axe de rotation et relativement à la partie de fermeture. Les amincissements locaux sont, avantageusement et dans un premier exemple de réalisation, obtenus en même temps que la formation de la pièce d'étanchéité conforme au premier aspect de l'invention, par exemple lors du moulage de cette dernière. Dans ce cas, le nombre d'étape de fabrication de l'invention est minimisé. Dans un deuxième exemple de réalisation alternatif au premier exemple de réalisation, les amincissements locaux sont obtenus successivement à la formation de la pièce d'étanchéité conforme au premier aspect de l'invention, par exemple en rainurant ladite pièce d'étanchéité ;
- tous les amincissements locaux de matière sont alignés et forment ensemble un axe de rotation de la liaison flexible par rapport à la partie de fermeture. Les amincissements locaux forment ensemble l'extension d'étanchéité par rapport à la partie de fermeture ;
- de manière préférentielle, la liaison flexible est formée par exactement deux amincissements locaux de matière, chaque amincissement local étant situé à proximité d'un bord latéral d'appui de la pièce d'étanchéité. Les bords latéraux d'appui sont opposés l'un à l'autre et bordent la pièce d'étanchéité de sorte à pouvoir être mis en appui contre le véhicule automobile. Par exemple, l'un des bord latéraux d'appui est destiné à être mis en appui contre l'aile de carrosserie du véhicule automobile, et l'autre bord latéral d'appui est destiné à être mis en appui contre la structure du véhicule automobile. Le fait que les amincissements locaux soient chacun situés à proximité d'un bord latéral d'appui de la pièce d'étanchéité facilite le juste positionnement de l'extension d'étanchéité lors de sa mise en rotation de selon l'axe de rotation ;
- deux amincissements locaux de matière directement adjacents sont séparés par un profil circulaire ou elliptique de la pièce d'étanchéité. Un profil circulaire ou elliptique de la pièce d'étanchéité entre deux amincissements locaux de matière directement adjacente renforce mécaniquement la liaison flexible. De plus, un tel profil autorise le rapprochement entre la partie de fermeture et l'extension d'étanchéité qui a lieu lors de la rotation, en limitant la quantité de matière au niveau de l'axe de rotation ;
- un profil de la partie de fermeture est identique à un profil de l'aile de carrosserie de véhicule automobile, afin de permettre un appui plan de la partie de fermeture contre l'aile de carrosserie dudit véhicule automobile. Lorsque le profil de la partie de fermeture est identique au profil de l'aile de carrosserie de véhicule automobile, les formes de la partie de fermeture et de l'aile de carrosserie sont complémentaires au niveau du profil de la partie de fermeture et du profil de l'aile de carrosserie de véhicule automobile. Cette complémentarité participe, lors de la mise en oeuvre de l'invention dans le véhicule automobile, à la bonne isolation phonique entre le compartiment moteur et l'habitacle ;
- l'extension d'étanchéité comprend des moyens de retenue contre l'aile de carrosserie du véhicule automobile. Les moyens de retenue participent au positionnement de l'extension d'étanchéité contre l'aile de carrosserie du véhicule automobile. Ainsi, lors de la mise en oeuvre de l'invention dans le véhicule automobile, les moyens de retenue participent à la bonne isolation phonique entre le compartiment moteur et l'habitacle. Notamment, les moyens de retenue permettent de palier aux vibrations de l'extension d'étanchéité, que ce soit des vibrations intrinsèques ou extrinsèques au véhicule automobile ;
- les moyens de retenu prennent la forme d'un adhésif solidaire d'une face d'appui de l'extension d'étanchéité destinée à être mise en appui contre l'aile de carrosserie du véhicule automobile. Plus particulièrement, l'adhésif est fixé solidairement sur la face d'appui de l'extension d'étanchéité, tel que par exemple au moyen d'un adhésif double face ;
- les moyens de retenu prennent la forme d'une surface magnétique solidaire d'une face d'appui de l'extension d'étanchéité destinée à être mise en appui contre l'aile de carrosserie du véhicule automobile. Selon une première alternative de réalisation, la surface magnétique est obtenue par application d'une peinture magnétique sur la face d'appui de l'extension d'étanchéité. Selon l'invention la surface magnétique est formée par un matériau magnétique solidaire de la face d'appui ;
- la pièce d'étanchéité est formée par un matériau en plastique. Le matériau en plastique comprend ainsi un plastique ou un composite en plastique. A titre d'exemple non limitatif, le matériau en plastique formant la pièce d'étanchéité peut comprendre du polyuréthane et/ou être intissé ;
- la pièce d'étanchéité est obtenue par moulage.

Selon un deuxième aspect de l'invention, il est proposé un véhicule automobile comportant une structure supportant une aile de carrosserie et une pièce d'étanchéité conforme au premier aspect de l'invention ou selon l'un quelconque de ses perfectionnements, fixée solidairement à la structure du véhicule automobile.

La structure supportant l'aile de carrosserie prend par exemple la forme d'un châssis. La structure est un ensemble de profilés rigides destinés à porter des éléments de carrosserie telle l'aile de carrosserie.

L'aile de carrosserie forme un carénage autour d'une des roues. Avantageusement, la pièce d'étanchéité conforme au premier aspect de l'invention coopère avec une aile de carrosserie avant véhicule automobile conforme au deuxième aspect de l'invention, qu'elle soit droite ou gauche, se sorte à isoler acoustiquement un compartiment moteur situé à l'avant du véhicule automobile conforme au deuxième aspect de l'invention, de l'habitacle dudit véhicule automobile. L'aile de carrosserie comprend une partie latérale qui s'étend sur un flanc du véhicule automobile conforme au deuxième aspect de l'invention. L'aile de carrosserie comprend une partie supérieure qui est située dans le prolongement de la partie latérale de ladite aile de carrosserie, côté capot.

La partie de fermeture et l'extension d'étanchéité isolent chacune l'habitacle du véhicule automobile conforme au deuxième aspect de l'invention des nuisances sonores provenant du compartiment moteur dudit véhicule automobile.

La partie de fermeture assure une isolation acoustique latérale entre l'aile de carrosserie du véhicule automobile conforme au deuxième aspect de l'invention et la structure dudit véhicule automobile en coopérant avec la partie latérale de l'aile de carrosserie.

L'extrémité supérieure de la partie de fermeture est orientée vers le capot du véhicule automobile conforme au deuxième aspect de l'invention et l'extrémité inférieure est orientée à l'opposé, vers un pare-choc du véhicule automobile. Dès lors, l'extension d'étanchéité, située à l'extrémité supérieure de la partie de fermeture, est orientée vers le capot.

L'extension d'étanchéité assure une isolation acoustique supérieure en coopérant avec la partie supérieure de l'aile de carrosserie.

L'extension d'étanchéité permet de masquer la zone technique intérieur véhicule automobile conforme au deuxième aspect de l'invention.

La liaison flexible prend la forme d'une charnière reliant la partie de fermeture à l'extension d'étanchéité, afin de permettre à l'extension d'étanchéité de pouvoir pivoter autour d'un axe de rotation et relativement à la partie de fermeture. Cette possibilité de pouvoir pivoter permet de faciliter la mise en place de la pièce d'étanchéité au niveau de l'aile de carrosserie du véhicule automobile conforme au deuxième aspect de l'invention. Plus particulièrement, cette possibilité de pouvoir pivoter permet de faciliter la mise en place de l'extension d'étanchéité de la pièce d'étanchéité au niveau de la partie supérieure de l'aile de carrosserie du véhicule automobile, une fois la partie de fermeture de la pièce d'étanchéité fixée solidairement à l'aile de carrosserie au niveau de la partie latérale de l'aile de carrosserie du véhicule automobile.

La pièce d'étanchéité est fixée solidairement à la structure du véhicule automobile au niveau de l'un du bord latéral d'appui de ladite pièce d'étanchéité. Ce bord latéral d'appui est alors en appui contre l'aile de carrosserie du véhicule automobile conforme au deuxième aspect de l'invention.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un véhicule automobile conforme au deuxième aspect de l'invention, comprenant une pièce d'étanchéité conforme au premier aspect de l'invention ;
[Fig.2] illustre une vue schématique détaillée du véhicule automobile conforme au deuxième aspect de l'invention présenté en FIGURE 1 ;
[Fig.3] illustre une vue schématique de la pièce d'étanchéité conforme au premier aspect de l'invention dans une première conformation correspondant à celle adoptée par la pièce d'étanchéité lorsqu'elle s'étend dans un plan principal ;
[Fig.4] illustre une vue schématique de la pièce d'étanchéité conforme au premier aspect de l'invention dans une deuxième conformation correspondant à celle adoptée par la pièce d'étanchéité lorsqu'elle s'étend dans deux plans distincts ;
[Fig.5] illustre une vue schématique d'une zone technique intérieure du véhicule automobile conforme au deuxième aspect de l'invention, l'aile de carrosserie coopérant avec la pièce d'étanchéité conforme au premier aspect de l'invention telle que présentée en FIGURE 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

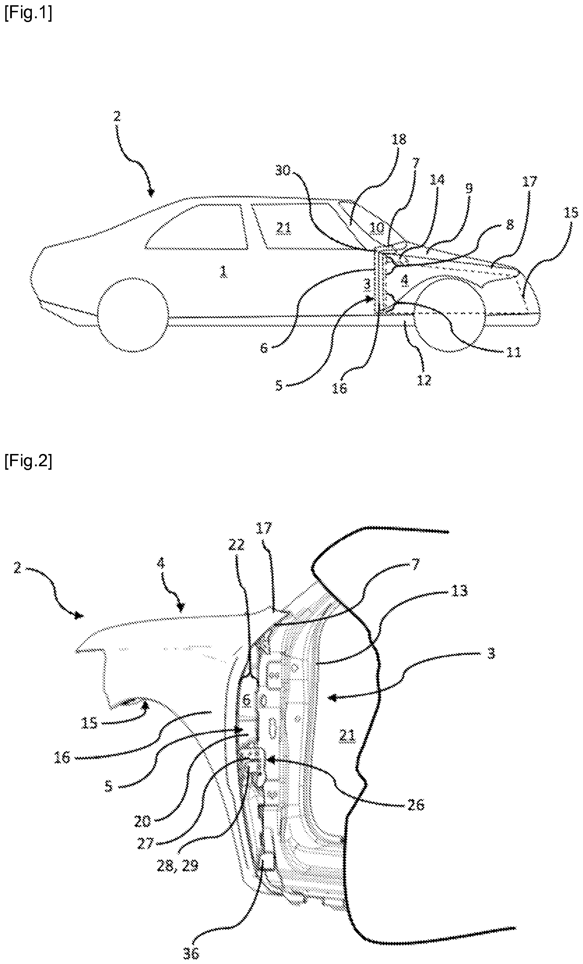

La FIGURE 1 montre l'un des flancs 1 d'un véhicule automobile 2 conforme au deuxième aspect de l'invention. Le véhicule automobile 2 comprend une structure 3 représentée en FIGURE 2, une aile 4 de carrosserie à l'avant du véhicule automobile 2, et une pièce d'étanchéité 5 conforme au premier aspect de l'invention. La pièce d'étanchéité 5 est située entre l'aile 4 de carrosserie et la structure 3. La pièce d'étanchéité 5 conforme au premier aspect de l'invention peut être positionnée sur l'une des ailes 4 de carrosserie du véhicule automobile 2, et avantageusement sur les deux ailes 4 de carrosserie à l'avant du véhicule automobile 2.

L'aile 4 de carrosserie du véhicule automobile 2 est galbée pour avoir un rayon de courbure orienté du côté d'un compartiment moteur 15 du véhicule automobile 2. Le compartiment moteur 15 du véhicule automobile 2 est représenté par transparence en pointillés dans la FIGURE 1.

L'aile 4 de carrosserie du véhicule automobile 2 comprend une partie latérale 16 prolongée par une partie supérieure 17. La partie latérale 16 de l'aile 4 de carrosserie du véhicule automobile 2 est située sur le flanc 1 du véhicule automobile 2. La partie supérieure 17 de l'aile 4 de carrosserie du véhicule automobile 2 est située entre la partie latérale 16 de l'aile 4 de carrosserie du véhicule automobile 2 et un capot 9 du véhicule automobile 2.

La pièce d'étanchéité 5 conforme au premier aspect de l'invention est représentée en traits gras et pointillés dans la FIGURE 1. La pièce d'étanchéité 5 comprend une partie de fermeture 6 fixée solidairement à une extension d'étanchéité 7 par l'intermédiaire d'une liaison flexible 30 de la pièce d'étanchéité 5.

La partie de fermeture 6 de la pièce d'étanchéité 5 s'étend dans le prolongement d'un pilier de maintien 18 du pare-brise 10 du véhicule automobile 2 compris dans la structure 3 du véhicule automobile 2.

La partie de fermeture 6 de la pièce d'étanchéité 5 comprend une extrémité supérieure 8 du côté du capot 9 du véhicule automobile 2, et une extrémité inférieure 11 du côté d'un pare-choc 12 du véhicule automobile 2. La liaison flexible 30 de la pièce d'étanchéité 5 fixe solidairement l'extension d'étanchéité 7 de la pièce d'étanchéité 5 et l'extrémité supérieure 8 de la partie de fermeture 6 de la pièce d'étanchéité 5.

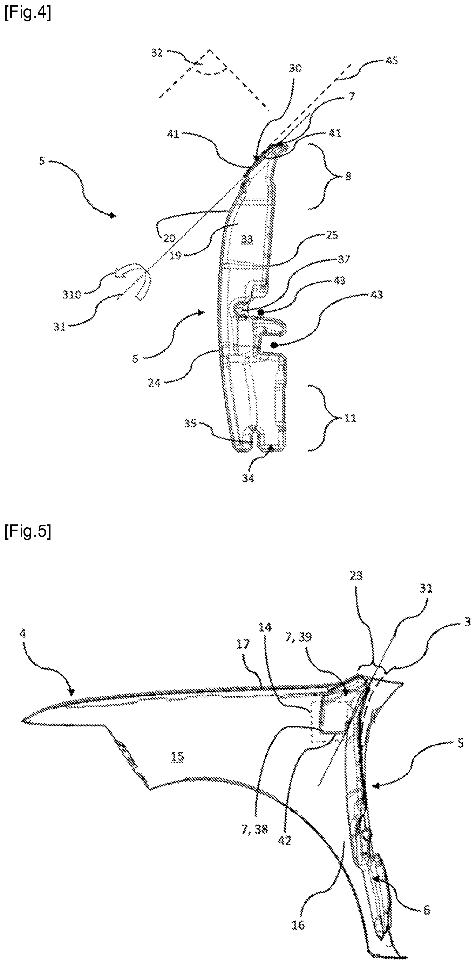

La partie latérale 16 de l'aile 4 de carrosserie du véhicule automobile 2 coopère avec la partie de fermeture 6 de la pièce d'étanchéité 5. La coopération de la partie latérale 16 de l'aile de carrosserie du véhicule automobile 2 et de la partie de fermeture 6 de la pièce d'étanchéité 5 est illustrée plus en détails à la FIGURE 2. La partie supérieure 17 de l'aile 4 de carrosserie du véhicule automobile 2 coopère avec l'extension d'étanchéité 7 de la pièce d'étanchéité 5. La coopération de la partie supérieure 17 de l'aile 4 de carrosserie du véhicule automobile 2 et de l'extension d'étanchéité 7 de la pièce d'étanchéité 5 est illustrée plus en détails à la FIGURE 5.

Le véhicule automobile 2 comprend une zone technique intérieure 14. La zone technique intérieure 14 du véhicule automobile 2 est représentée par transparence en pointillés dans la FIGURE 1. Conformément à l'invention, la zone technique intérieure 14 du véhicule automobile 2 est disposée sous la pièce d'étanchéité 5. La zone technique intérieure 14 du véhicule automobile 2 est ouverte sur le compartiment moteur 15 du véhicule automobile 2. L'aile 4 de carrosserie du véhicule automobile 2 participe, avec le capot 9 du véhicule automobile 2, à couvrir le compartiment moteur 15 du véhicule automobile 2.

En l'absence de la pièce d'étanchéité 5 conforme au premier aspect de l'invention, le compartiment moteur 15 du véhicule automobile 2 serait ouvert sur un habitacle 21 du véhicule automobile et la zone technique intérieure 14 du véhicule automobile 2 serait apparente et ouverte sur l'extérieur du véhicule automobile 2.

La FIGURE 2 présente plus en détails l'agencement de la pièce d'étanchéité 5 conforme au premier aspect de l'invention par rapport à la structure 3 du véhicule automobile 2 et par rapport à la partie latérale 16 de l'aile 4 de carrosserie dudit véhicule automobile 2. Le véhicule automobile 2 est présenté partiellement pour faciliter la compréhension de la mise en oeuvre de la pièce d'étanchéité 5 conforme au premier aspect de l'invention dans sa coopération avec les autres éléments du véhicule automobile 2. La FIGURE 2 illustre notamment comment, selon l'invention, la pièce d'étanchéité 5 assure une isolation acoustique entre le compartiment moteur 15 du véhicule automobile 2, recouvert par l'aile 4 de carrosserie du véhicule automobile 2 dans la FIGURE 2, et l'habitacle 21 du véhicule automobile 2.

La structure 3 du véhicule automobile 2 supporte l'aile 4 de carrosserie du véhicule automobile 2. La structure 3 du véhicule automobile 2 comprend un côté de caisse 13. Le côté de caisse 13 forme un encadrement de porte avant destiné à supporter une porte avant de carrosserie du véhicule automobile 2 immédiatement adjacente à l'aile 4 de carrosserie du véhicule automobile 2. La porte avant de carrosserie du véhicule automobile 2 n'est pas illustrée dans la FIGURE 2.

L'aile 4 de carrosserie du véhicule automobile 2 et la structure 3 du véhicule automobile 2 sont, en l'absence de la pièce d'étanchéité 5 conforme au premier aspect de l'invention, séparées par un écart 22 au niveau de la partie latérale 16 de l'aile 4 de carrosserie du véhicule automobile 2. En l'espèce, la partie de fermeture 6 de la pièce d'étanchéité 5 comble l'écart 22 entre l'aile 4 de carrosserie du véhicule automobile 2 et la structure 3 du véhicule automobile 2.

La partie de fermeture 6 de la pièce d'étanchéité 5 conforme au premier aspect de l'invention comprend une première face dirigée vers le compartiment moteur 15 et une deuxième face 20 opposée à la première face et dirigée vers l'habitacle 21. Seule la deuxième face 20 de la partie de fermeture 6 de la pièce d'étanchéité 5 est visible sur la FIGURE 2 du fait de l'angle de vue.

La partie de fermeture 6 de la pièce d'étanchéité 5 conforme au premier aspect de l'invention s'étend le long de la partie latérale 16 de l'aile 4 de carrosserie du véhicule automobile 2 et est en appui contre cette dernière. La partie de fermeture 6 de la pièce d'étanchéité 5 a un profil identique au profil de l'aile 4 de carrosserie du véhicule automobile 2 de sorte à épouser la partie latérale 16 de l'aile 4 de carrosserie du véhicule automobile 2 pour obstruer l'écart 22.

La partie de fermeture 6 de la pièce d'étanchéité 5 conforme au premier aspect de l'invention et la structure 3 du véhicule automobile 2 coopèrent ensemble. La partie de fermeture 6 de la pièce d'étanchéité 5 a un profil complémentaire à la structure 3 du véhicule automobile 2. La partie de fermeture 6 de la pièce d'étanchéité 5 prend appui sur la structure 3 du véhicule automobile, de sorte à obstruer l'écart 22.

La pièce d'étanchéité 5 conforme au premier aspect de l'invention est fixée solidairement à la structure 3 du véhicule automobile 2 conforme au deuxième aspect de l'invention par un moyen de solidarisation 26 amovible. Le moyen de solidarisation 26, en l'espèce, comprend une plaque de fixation 27 à pattes. La plaque de fixation 27 comprend des orifices 28. Des vis 29 traversent les orifices 28 de la plaque de fixation 27 pour solidariser la pièce d'étanchéité 5 à la structure 3 du véhicule automobile 2.

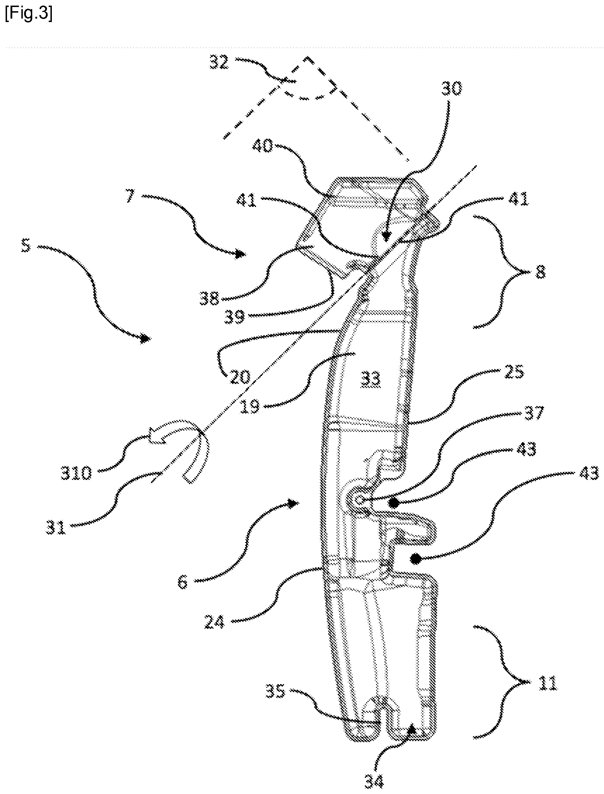

En référence à la FIGURE 3 et à la FIGURE 4, la pièce d'étanchéité 5 conforme au premier aspect de l'invention est représentée de manière schématique dans deux situations différentes afin de mettre en avant l'invention selon son premier aspect. La FIGURE 3 et à la FIGURE 4 représentent chacune de façon schématique une conformation de la pièce d'étanchéité 5, respectivement une première conformation, dite « déployée », et une deuxième conformation, dite « repliée ». La première conformation de la pièce d'étanchéité 5 et la deuxième conformation de la pièce d'étanchéité 5 sont distinctes de part la position relative entre la partie de fermeture 6 de la pièce d'étanchéité 5 et l'extension d'étanchéité 7 de la pièce d'étanchéité 5.

La FIGURE 3 et la FIGURE 4 montrent que l'extension d'étanchéité 7 de la pièce d'étanchéité 5 conforme au premier aspect de l'invention est reliée à la partie de fermeture 6 de la pièce d'étanchéité 5 par la liaison flexible 30. La liaison flexible 30 comprend un axe de rotation 31 autour duquel s'articule l'extension d'étanchéité 7 de la pièce d'étanchéité 5, tel qu'illustré par une flèche 310.

La pièce d'étanchéité 5 conforme au premier aspect de l'invention est monobloc : l'extension d'étanchéité 7 de la pièce d'étanchéité 5, la partie de fermeture 6 de la pièce d'étanchéité 5 et la liaison flexible 30 de la pièce d'étanchéité 5 forment ensemble une seule et même pièce continue, faite d'un seul tenant et obtenue au cours d'un même procédé de fabrication. Ledit procédé de fabrication est par exemple un procédé de moulage d'un matériau en plastique.

La FIGURE 3 illustre la pièce d'étanchéité 5 conforme au premier aspect de l'invention telle qu'elle se présente à l'issue du moulage. La pièce d'étanchéité 5 s'étend principalement dans un plan principal 32, de sorte à faciliter sa fabrication et notamment son démoulage. Dans la première conformation, l'extension d'étanchéité 7 de la pièce d'étanchéité 5 et la partie de fermeture 6 de la pièce d'étanchéité 5 s'étendent principalement toutes deux dans le plan principal 32.

La partie de fermeture 6 de la pièce d'étanchéité 5 conforme au premier aspect de l'invention comprend un corps 33 et deux bords latéraux d'appui 24, 25 opposés l'un à l'autre, un premier bord latéral d'appui 24 et un deuxième bord latéral d'appui 25. Chaque bord latéral d'appui 24, 25 a un profil qui lui est propre pour s'ajuster d'une part à l'aile 4 de carrosserie du véhicule automobile 2 et d'autre part à la structure 3 du véhicule automobile 2.

Le premier bord latéral d'appui 24 de la partie de fermeture 6 de la pièce d'étanchéité 5 conforme au premier aspect de l'invention est configuré pour être complémentaire au galbe de la partie latérale 16 de l'aile 4 de carrosserie du véhicule automobile 2. Le profil du premier bord latéral d'appui 24 de la partie de fermeture 6 de la pièce d'étanchéité 5 forme une courbe qui est continue depuis l'extrémité supérieure 8 de la partie de fermeture 6 de la pièce d'étanchéité 5 jusqu'à l'extrémité inférieure 11 de la partie de fermeture 6 de la pièce d'étanchéité 5. Le profil du premier bord latéral d'appui 24 de la partie de fermeture 6 de la pièce d'étanchéité 5 a un rayon de courbure orienté du côté du corps 33 de la partie de fermeture 6 de la pièce d'étanchéité 5. Le profil du premier bord latéral d'appui 24 épouse ainsi le galbe de la partie latérale 16 de l'aile 4.

Le deuxième bord latéral d'appui 25 de la partie de fermeture 6 de la pièce d'étanchéité 5 conforme au premier aspect de l'invention a un profil qui est configuré pour s'emboîter dans la structure 3 du véhicule automobile 2. Le profil du deuxième bord latéral d'appui 25 a une forme crénelée, avec deux creux rectangulaires 43 entre l'extrémité supérieure 8 de la partie de fermeture 6 de la pièce d'étanchéité 5 et l'extrémité inférieure 11 de la partie de fermeture 6 de la pièce d'étanchéité 5. Les deux creux rectangulaires 43 sont destinées au logement d'éléments de la structure 3 du véhicule automobile 2.

Le deuxième bord latéral d'appui 25 de la partie de fermeture 6 de la pièce d'étanchéité 5 et le premier bord latéral d'appui 24 de la partie de fermeture 6 de la pièce d'étanchéité 5 sont reliés entre eux du côté de l'extrémité supérieure 8 de la partie de fermeture 6 de la pièce d'étanchéité 5 par la liaison flexible 30. Le deuxième bord latéral d'appui 25 de la partie de fermeture 6 de la pièce d'étanchéité 5 et le premier bord latéral d'appui 24 de la partie de fermeture 6 de la pièce d'étanchéité 5 sont reliés entre eux du côté de l'extrémité inférieure 11 de la partie de fermeture 6 de la pièce d'étanchéité 5 par un bord inférieur 34.

Le bord inférieur 34 de la partie de fermeture 6 de la pièce d'étanchéité 5 conforme au premier aspect de l'invention comprend un évidement de matière 35. En l'espèce, l'évidement de matière 35 correspond à une fente ayant un profil en U. L'évidement de matière 35 participe au positionnement par emboîtement de la pièce d'étanchéité 5 conforme au premier aspect de l'invention sur la structure 3 du véhicule automobile 2, notamment par l'intermédiaire d'une portée d'assemblage 36 destinée à être logée dans l'évidement de matière 35 du bord intérieure 34 de la partie de fermeture 6 de la pièce d'étanchéité 5.

La partie de fermeture 6 de la pièce d'étanchéité 5 est une pièce pleine, à l'exception d'une ouverture 37 située au niveau du deuxième bord latéral 25 de la partie de fermeture 6 de la pièce d'étanchéité 5. L'ouverture 37 traverse la partie de fermeture 6 de la pièce d'étanchéité 5 depuis sa première face 19 jusqu'à sa deuxième face 20. Cette ouverture 37, adjacente à l'un des deux creux 37, est destinée à recevoir le moyen de solidarisation 26.

L'extension d'étanchéité 7 de la pièce d'étanchéité 5 comprend une face intérieure 39 opposée à la face d'appui 38.

La face d'appui 38 de l'extension d'étanchéité 7 de la pièce d'étanchéité 5 est destinée à être mise en appui contre l'aile 4 de carrosserie du véhicule automobile 2. Plus particulièrement, la face d'appui 38 de l'extension d'étanchéité 7 de la pièce d'étanchéité 5 est destinée à être mise en appui de la partie supérieure 17 de l'aile 4 de carrosserie du véhicule automobile 2, du côté de la zone technique intérieure 14 du véhicule automobile 2 comme illustré en FIGURE 5.

La face d'appui 38 de l'extension d'étanchéité 7 de la pièce d'étanchéité 5 est dans le prolongement de la première face 19 de la partie de fermeture 6 de la pièce d'étanchéité 5. La face intérieure 39 de l'extension d'étanchéité 7 de la pièce d'étanchéité 5 est dans le prolongement de la deuxième face 20 de la partie de fermeture 6 de la pièce d'étanchéité 5.

L'extension d'étanchéité 7 de la pièce d'étanchéité 5 est une pièce pleine qui comprend une bordure périphérique 40 délimitant l'extension d'étanchéité avec la liaison flexible 30. La bordure périphérique 40 de l'extension d'étanchéité 7 de la pièce d'étanchéité 5 comprend des portions successives de forme droite.

La liaison flexible 30 comprend au moins deux amincissements locaux 41 de matière, chaque amincissement local 41 formant une zone de déformation flexible. Les deux amincissements locaux 41 sont alignés et forment ensemble l'axe de rotation 31.

La FIGURE 4 montre la pièce d'étanchéité 5 conforme au premier aspect de l'invention telle que décrite en FIGURE 3.

Pour passer de la première conformation de la pièce d'étanchéité 5 à la deuxième conformation de la pièce d'étanchéité 5, l'extension d'étanchéité 7 de la pièce d'étanchéité 5 est mise en rotation autour de l'axe de rotation 31 de la liaison flexible 30 de la pièce d'étanchéité 5. La mise en rotation est possible grâce aux deux amincissements locaux 41 alignés de la liaison flexible 30.

La mise en rotation de l'extension d'étanchéité 7 de la pièce d'étanchéité 5 autour de l'axe de rotation 31 de la liaison flexible 30 de la pièce d'étanchéité 5 est orientée de sorte à ce que la face intérieure 39 de l'extension d'étanchéité 7 de la pièce d'étanchéité 5, non visible du fait de l'angle de vue, soit rapprochée de la deuxième face 20 de la partie de fermeture 6 de la pièce d'étanchéité 5. Dès lors, la face d'appui 38 de l'extension d'étanchéité 7 de la pièce d'étanchéité 5, non visible du fait de l'angle de vue, peut être mise en appui de la partie supérieure 17 de l'aile 4 de carrosserie du véhicule automobile 2 comme illustré sur la FIGURE 5.

L'extension d'étanchéité 7 de la pièce d'étanchéité 5 est mise en rotation autour de l'axe de rotation 31 de la liaison flexible 30 de la pièce d'étanchéité 5 de sorte à s'étendre dans un plan secondaire 45 sécant au plan principal 32. Alors, l'extension d'étanchéité 7 de la pièce d'étanchéité 5 forme, avec la partie de fermeture 6 de la pièce d'étanchéité 5, un angle. L'angle formé entre l'extension d'étanchéité 7 de la pièce d'étanchéité 5 et la partie de fermeture 6 de la pièce d'étanchéité 5 est par exemple un angle compris entre 40° et 50°. Avantageusement, l'angle formé entre l'extension d'étanchéité 7 de la pièce d'étanchéité 5 et la partie de fermeture 6 de la pièce d'étanchéité 5 est un angle de 45°.

La FIGURE 5 illustre la position relative de la pièce d'étanchéité 5 conforme au premier aspect de l'invention par rapport à l'aile 4 de carrosserie du véhicule automobile 2. L'aile 4 de carrosserie du véhicule y est vue du côté de la zone technique intérieure 14 du véhicule automobile 2. Dans la FIGURE 5, la zone technique intérieure 14 du véhicule automobile 2 est schématisée en traits pointillés fins et la structure 3 du véhicule automobile 2 est schématisée en traits pointillés larges. L'axe de rotation 31 est également illustré.

La FIGURE 5 montre la coopération de la partie de fermeture 6 de la pièce d'étanchéité 5 avec la partie latérale 16 de l'aile 4 de carrosserie du véhicule automobile 2, et montre la coopération de la partie supérieure 17 de l'aile 4 de carrosserie du véhicule automobile 2 avec l'extension d'étanchéité 7 de la pièce d'étanchéité 5.

L'aile 4 de carrosserie du véhicule automobile 2 et la structure 3 du véhicule automobile 2 sont, en l'absence de la pièce d'étanchéité 5 conforme au premier aspect de l'invention, séparées par un intervalle 23. L'intervalle 23 est situé entre la partie supérieure 17 de l'aile 4 de carrosserie du véhicule automobile 2 et la structure 3 du véhicule automobile 2. L'intervalle 23 est laissé libre en l'absence de la pièce d'étanchéité 5 conforme au premier aspect de l'invention. En l'espèce, l'extension d'étanchéité 7 de la pièce d'étanchéité 5 comble l'intervalle 23 entre l'aile 4 de carrosserie du véhicule automobile 2 et la structure 3 du véhicule automobile 2. La pièce d'étanchéité 5 couvre ainsi la zone technique intérieure 14 du véhicule automobile 2.

Des moyens de retenue 42, tels que des adhésifs, sont associés à la face d'appui 38 de l'extension d'étanchéité 7 de la pièce d'étanchéité 5 conforme au premier aspect de l'invention. Les moyens de retenue 42 de l'extension d'étanchéité 7 fixent l'extension d'étanchéité 7 à l'aile 4 de carrosserie du véhicule automobile 2. En particulier, la face d'appui 38 de l'extension d'étanchéité 7 de la pièce d'étanchéité 5 est retenue, grâce aux moyens de retenue 42, contre la partie supérieure 17 de l'aile 4 de carrosserie du véhicule automobile 2. L'extension d'étanchéité 7 de la pièce d'étanchéité 5 conforme au premier aspect de l'invention est ainsi maintenue en position et couvre stablement la zone technique intérieure 14 du véhicule automobile 2.

L'extension d'étanchéité 7 de la pièce d'étanchéité 5 conforme au premier aspect de l'invention assure une isolation acoustique du compartiment moteur 15 du véhicule automobile 2. L'extension d'étanchéité 7 de la pièce d'étanchéité 5 empêche également l'intrusion de débris extérieurs dans la zone technique intérieure 14. L'extension d'étanchéité 7 de la pièce d'étanchéité 5 améliore également l'esthétique du véhicule automobile 2 en masquant la zone technique intérieure 14.

En synthèse, l'invention concerne une pièce d'étanchéité 5 d'une aile 4 de carrosserie d'un véhicule automobile 2 configurée pour masquer une zone technique intérieure 14 du véhicule automobile 2. La pièce d'étanchéité 5 comprend une partie de fermeture 6 qui épouse la structure 3 du véhicule automobile 2 et l'aile 4 de carrosserie du véhicule automobile 2. La pièce d'étanchéité 5 comprend une extension d'étanchéité 7 qui prolonge la partie de fermeture 6 et prend appui sur une partie supérieure 17 de l'aile 4 de carrosserie à l'intérieure de l'aile 4 de carrosserie. L'extension d'étanchéité 7 et la partie de fermeture 6 s'articulent autour d'un axe de rotation d'une liaison flexible 30 de la pièce d'étanchéité 5 afin d'ajuster la coopération avec l'aile 4 de carrosserie du véhicule automobile 2 et avec la structure 3 du véhicule automobile 2.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Pièce d'étanchéité (5) acoustique d'aile (4) de carrosserie de véhicule automobile (2), la pièce d'étanchéité (5) comprenant une partie de fermeture (6) destinée à être interposée entre l'aile (4) de carrosserie du véhicule automobile (2) et une structure (3) dudit véhicule automobile (2), la pièce d'étanchéité (5) comprenant une extension d'étanchéité (7) située à une extrémité supérieure (8) de la partie de fermeture (6) et reliée à la partie de fermeture (6) par une liaison flexible (30), l'extension d'étanchéité (7) comprenant des moyens de retenue (42) contre l'aile (4) de carrosserie du véhicule automobile (2), **caractérisé en ce que** les moyens de retenu prennent la forme d'une surface magnétique solidaire d'une face d'appui (38) de l'extension d'étanchéité (7) destinée à être mise en appui contre l'aile (4) de carrosserie du véhicule automobile (2).

2. Pièce d'étanchéité (5) selon la revendication précédente, dans laquelle l'extension d'étanchéité (7) et la liaison flexible (30) sont issues de matière avec la partie de fermeture (6).

3. Pièce d'étanchéité (5) selon la revendication précédente, dans laquelle la liaison flexible (30) comprend au moins deux amincissements locaux (41) de matière, chaque amincissement local (41) formant une zone de déformation flexible.

4. Pièce d'étanchéité (5) selon la revendication précédente, dans laquelle tous les amincissements locaux (41) de matière sont alignés et forment ensemble un axe de rotation (31) de la liaison flexible (30) par rapport à la partie de fermeture (6).

5. Véhicule automobile (2) comportant une structure (3) supportant une aile (4) de carrosserie et une pièce d'étanchéité (5) selon l'une quelconque des revendications précédentes fixée solidairement à la structure (3) du véhicule automobile (2)

## Patentansprüche

1. Akustisches Dichtungsteil (5) eines Flügels (4) einer Kraftfahrzeugkarosserie (2), wobei das Dichtungsteil (5) ein Verschlussteil (6) umfasst, das dazu bestimmt ist, zwischen dem Flügel (4) der Kraftfahrzeugkarosserie (2) und einer Struktur (3) des Kraftfahrzeugs (2) angeordnet zu werden,
Dichtungsstück (5) mit einem Dichtungsfortsatz (7), der sich an einem oberen Ende (8) des Verschlussteils (6) befindet und mit dem Verschlussteil (6) durch eine flexible Verbindung (30) verbunden ist, wobei der Dichtungsfortsatz (7) Haltemittel (42) gegen den Flügel (4) der Karosserie des Kraftfahrzeugs (2) aufweist, **dadurch gekennzeichnet, dass** die Haltemittel die Form einer magnetischen Fläche aufweisen, die fest mit einer Anlagefläche (38) des Dichtungsfortsatzes (7) verbunden ist, die dazu bestimmt ist, gegen den Flügel (4) der Karosserie des Kraftfahrzeugs (2) gedrückt zu werden.

2. Dichtungsstück (5) nach dem vorhergehenden Anspruch, bei dem der Dichtungsfortsatz (7) und die flexible Verbindung (30) aus Material mit dem Verschlussteil (6) hergestellt sind.

3. Dichtungsstück (5) nach dem vorhergehenden Anspruch, bei dem die flexible Verbindung (30) mindestens zwei lokale Materialverdünnungen (41) umfasst, wobei jede lokale Verdünnung (41) eine flexible Verformungszone bildet.

4. Dichtungsstück (5) nach dem vorhergehenden Anspruch, bei dem alle lokalen Materialverdünnungen (41) ausgerichtet sind und zusammen eine Drehachse (31) der flexiblen Verbindung (30) in Bezug auf das Verschlussteil (6) bilden.

5. Kraftfahrzeug (2), umfassend eine Struktur (3), die einen Karosserieflügel (4) trägt, und ein Dichtungsteil (5) nach einem der vorhergehenden Ansprüche, das einstückig an der Struktur (3) des Kraftfahrzeugs (2) befestigt ist.

## Claims

1. Acoustic sealing part (5) of a wing (4) of a motor vehicle body (2), the sealing part (5) comprising a closing part (6) intended to be interposed between the wing (4) of the motor vehicle body (2) and a structure (3) of said motor vehicle (2),
the sealing piece (5) comprising a sealing extension (7) situated at an upper end (8) of the closure part (6) and connected to the closure part (6) by a flexible connection (30), the sealing extension (7) comprising retaining means (42) against the wing (4) of the bodywork of the motor vehicle (2), **characterized in that** the retaining means take the form of a magnetic surface integral with a bearing face (38) of the sealing extension (7) intended to be pressed against the wing (4) of the bodywork of the vehicle motor vehicle (2).

2. Sealing piece (5) according to the preceding claim, in which the sealing extension (7) and the flexible connection (30) are made of material with the closure part (6).

3. Sealing piece (5) according to the preceding claim, in which the flexible connection (30) comprises at least two local thinnings (41) of material, each local thinning (41) forming a flexible deformation zone.

4. Sealing piece (5) according to the preceding claim, in which all the local thinnings (41) of material are aligned and together form an axis of rotation (31) of the flexible connection (30) with respect to the closing part (6).

5. Motor vehicle (2) comprising a structure (3) supporting a bodywork wing (4) and a sealing part (5) according to any one of the preceding claims, fixed integrally to the structure (3) of the motor vehicle (2).
